# EUROPEAN PATENT APPLICATION

(11) **EP 4 613 891 A1**
(43) Date of publication of application: **10.09.2025**
(21) Application number: 24162260.4
(22) Date of filing: 08.03.2024
(51) Int. Cl.: C22C 33/02, B33Y 70/00, C22C 38/00, C22C 38/02, C22C 38/04, C22C 38/12

(54) **STEEL POWDER FOR USE IN ADDITIVE MANUFACTURING PROCESSES**

(71) Applicant: SSAB Technology AB, 101 21 Stockholm (SE)
(72) Inventor: HAGLUND, Teodor, 101 21 Stockholm (SE); BROBERG, Gunnar, 101 21 Stockholm (SE); LARSSON, Robert, 101 21 Stockholm (SE); FAGER, Ulrika, 101 21 Stockholm (SE)
(74) Representative: AWA Sweden AB

(57) **Abstract**

A steel powder for use in additive manufacturing processes. The steel powder has a composition comprising (in wt.-%):
C
0.1 -0.3,
Si
0.15-0.4,
Mn
0.8-1.4,
Nb
0.005 - 0.03,
B
0.0005 - 0.003,
N
0.002 - 0.04

optionally Cr equal to or less than 0.35,
optionally Ni equal to or less than 0.15,
optionally Mo equal to or less than 0.15,
optionally V equal to or less than 0.04,
optionally Ti equal to or less than 0.03,
optionally Cu equal to or less than 0.15,
optionally Al equal to or less than 0.05,

balance Fe and unavoidable impurities;
wherein the unavoidable impurities P and S are limited to:
P
equal to or less than 0.03, preferably equal to or less than 0.02
5
equal to or less than 0.005, preferably equal to or less than 0.004

## Description

### TECHNICAL FIELD

The present disclosure relates in general to a steel powder for use in additive manufacturing processes. The present disclosure further relates in general to a method for producing a component using the steel powder.

### BACKGROUND

The efforts to improve various structural components such as parts for automotive industry have increased the awareness of the benefits of additive manufacturing (AM) processes. Additive manufacturing, sometimes also referred to as additive layer manufacturing (ALM), is a technology for producing three-dimensional objects of, for example, metallic materials by building up the object layer by layer. One of the main advantages of this technology is that it enables producing objects having a complex design, which may be very difficult or even impossible to produce by other methods. Thus, additive manufacturing opens up new possibilities for producing objects which may have a better configuration for the intended use thereof.

Additive manufacturing is a generic term encompassing various different processes. Examples of such processes include laser powder bed fusion (L-PBF), sometimes also referred to as selective laser melting, and directed energy deposition (DED). In L-PBF, a thin powder layer is first applied on a building platform. This takes place inside a gas-tight chamber that contains inert gas, for example argon or nitrogen, with low oxygen levels. A laser beam selectively melts the layer of powder. Then the platform is gradually lowered, and a new powder layer is applied. After that, the laser beam melting operation is repeated. The process is repeated until the desired component has been obtained and may be removed from the powder bed. In contrast, in DED, the material feedstock, which may be either a powder or a wire, is melted by a heat source and deposited in melted form onto a specified surface where it solidifies and thereby fuses with a previously formed layer. Examples of heat sources in DED include laser, electron beam or a gas-tungsten arc. This process is also typically performed in a controlled chamber with reduced oxygen levels.

Additive manufacturing is an emerging market and there is still a need to develop new powders suitable both for the additive manufacturing process as such, and which may enable sufficient properties in the as-built condition to the meet the requirements of the components to be produced therefrom. The metallurgy of additive manufacturing is very different from the metallurgy during conventional manufacturing methods, which includes casting. This is *inter alia* due to the surface chemistry of the powder. Furthermore, the considerably higher solidification and cooling rates associated with additive manufacturing, and the remelting of the material occurring during formation of the layers, may lead to differences in microstructure of the material compared to material manufactured by conventional methods, and hence also lead to differences in the properties of the component produced. This is one of the major difficulties when desiring to utilize additive manufacturing in the production of components which, in addition to a particular design, should be able to meet for example pre-identified mechanical requirements.

### SUMMARY

The object of the present invention is to provide a steel powder suitable for additive manufacturing, and which results in a good balance of mechanical properties, in particular hardness and strength, in a component produced thereof.

The object is achieved by the subject-matter of the appended independent claim(s). Various embodiments are defined by the dependent claims.

In accordance with the present disclosure, a steel powder for use in additive manufacturing processes is provided. The steel powder has the following composition in percent by weight (wt.-%):
A steel powder for use in additive manufacturing processes, the steel powder having the following composition in percent by weight (wt.-%):

| | |
|---|---|
| C | 0.1 - 0.3, |
| Si | 0.15 - 0.4, |
| Mn | 0.8 - 1.4, |
| Nb | 0.005 - 0.03, |
| B | 0.0005 - 0.003, |
| N | 0.002 - 0.04, |

optionally Cr equal to or less than 0.35,
optionally Ni equal to or less than 0.15,
optionally Mo equal to or less than 0.15,
optionally V equal to or less than 0.04,
optionally Ti equal to or less than 0.03,
optionally Cu equal to or less than 0.15,
optionally Al equal to or less than 0.05,
balance Fe and unavoidable impurities;
wherein the unavoidable impurities P and S are limited to:

| | |
|---|---|
| P | equal to or less than 0.03, preferably 0.02 |
| S | equal to or less than 0.005, preferably 0.004 |

The present disclosure also relates to the use of the above described steel powder in the production of components by additive manufacturing. The additive manufacturing process used may for example be a laser powder bed fusion (L-PBF) process or a directed energy deposition (DED) process.

Moreover, the present disclosure relates to a method for producing a component comprising performing additive manufacturing using the above-described steel power. The component may for example be a general engineering component or an automotive component, but is not limited thereto.

By means of the herein described steel powder, it is possible to obtain a microstructure comprising predominantly martensite with finely dispersed carbides in a component produced by additive manufacturing already in the as-built condition. Furthermore, it is possible to obtain a relative density of more than 99.5%, typically at least 99.9%, in the as-built condition.

Moreover, by means of the herein described steel powder, it is possible to obtain the following properties after additive manufacturing already in as-built condition, when tested at room temperature:
- a yield strength of at least 850 MPa, preferably at least 880 MPa, determined according to ISO 6892-1:2019,
- a tensile strength of at least 900 MPa, preferably at least 920 MPa, determined according to ISO 6892-1:2019,
- an A5 elongation of at least 12 %, preferably at least 15 %, determined according to ISO 6892-1:2019,
- an HV5 hardness of at least 250HV, preferably at least 270HV, determined according to ISO 6507-1:2018, and
- an impact toughness of at least 160 J, preferably at least 180 J, determined according to ISO 148-1:2016.

### DETAILED DESCRIPTION

The invention will be described in more detail below with reference to exemplifying embodiments. The invention is however not limited to the exemplifying embodiments discussed, but may be varied within the scope of the appended claims.

When ranges are disclosed in the present disclosure, such ranges include the end values of the range, unless explicitly disclosed otherwise. Similarly, if an open range is disclosed, the open range also includes the single end value of the open range, unless explicitly disclosed otherwise.

The present disclosure provides a steel powder, more specifically an engineering steel powder, which is intended to be used in one or more additive manufacturing processes. The steel powder is particularly useful for use in L-PBF or in DED processes. The steel powder has a composition which comprises, in percent by weight (wt.-%):
A steel powder for use in additive manufacturing processes, the steel powder having the following composition in percent by weight (wt.-%):

| | |
|---|---|
| C | 0.1 - 0.3, |
| Si | 0.15 - 0.4, |
| Mn | 0.8 - 1.4, |
| Nb | 0.005 - 0.03, |
| B | 0.0005 - 0.003, |
| N | 0.002 - 0.04 |

optionally Cr equal to or less than 0.35,
optionally Ni equal to or less than 0.15,
optionally Mo equal to or less than 0.15,
optionally V equal to or less than 0.04,
optionally Ti equal to or less than 0.03,
optionally Cu equal to or less than 0.15,
optionally Al equal to or less than 0.05,
balance Fe and unavoidable impurities;
wherein the unavoidable impurities P and S are limited to:

| | |
|---|---|
| P | equal to or less than 0.03, preferably 0.02 |
| S | equal to or less than 0.005, preferably 0.004 |

In the following, the importance of the different alloying elements of the steel powder will be briefly discussed. All percentages for the chemical composition are given in weight-% (wt.-%), unless explicitly disclosed otherwise. Upper and lower limits of the individual elements of the composition can be freely combined within the broadest limits set out in the claims, unless explicitly disclosed otherwise.

### Carbon (C): 0.1- 0.3 %

Carbon is an important element of the herein described composition since it contributes to the mechanical strength as well as hardness of a component produced from the herein described steel powder. Carbon contributes to increased strength e.g. due to solid solution strengthening. Furthermore, carbon may also reduce the melting temperature of the steel alloy, which facilitates the atomizing process used to produce the steel power. Therefore, the herein described composition comprises at least 0.1 % of C. Preferably, carbon is present in an amount of equal to or more than 0.12 %, or even equal to or more than 0.14 %.

However, too high amounts of carbon may result in increased residual stresses in the component produced by additive manufacturing. This in turn increases the risk for distortion of and/or formation of cracks in the component produced. Furthermore, too high contents of carbon may reduce the martensite transformation temperature, which makes it more difficult to obtain the desired martensitic structure. Therefore, carbon should not be added in amounts above 0.3 %. Preferably, the carbon content is equal to or less than 0.27 %, or even equal to or less than 0.21 %.

### Silicon (Si): 0.15 - 0.4 %

Silicon is an effective deoxidizing element frequently used within the steel industry. In additive manufacturing processes, silicon may contribute to binding potential surface oxides of the powder to form nanoscale round oxides which are less harmful to the properties of the component produced than other forms of oxides. Silicon is also added to the herein described composition to increase the hardness of the material of the printed component as it may contribute to solid solution hardening. Moreover, addition of silicon may also enhance weldability and since many additive manufacturing processes melts and welds the material on micron scale, silicon also enhances the material processing in these processes. Therefore, the present composition comprises at least 0.18 % of silicon. Suitably, the silicon content may be equal to or higher than 0.2 %.

However, too high contents of silicon may decrease the impact fracture toughness of the material of the produced component. Therefore, the herein described composition comprises at most 0.4 % Si. Preferably, silicon is present in an amount of equal to or less than 0.3 %, or even more preferred in an amount of equal to or less than 0.27 %.

### Manganese (Mn): 0.8 - 1.4 %

Manganese is an element contributing to increased hardness of a component produced by the herein described steel powder. Manganese also stabilizes the austenite phase and delays transformation of austenite during cooling. The present composition comprises at least 0.8 % manganese in order to achieve sufficiently complete martensite transformation and desired hardness. Such a content of manganese also has the advantage of reducing the risk for formation of other harmful metal sulfides, such as FeS that may otherwise lead to embrittlement. Manganese may preferably be present in an amount of at least 0.9 %, or even more preferably in an amount of at least 1 %.

However, manganese should not be added in contents above 1.4 % as this may result in segregation in the component produced from the steel powder. Such segregations may affect the microstructure and hence the mechanical properties negatively. Furthermore, a too high manganese content may result in a relatively large amount of retained austenite. This may in turn lead to tempering embrittlement and dimensional instability of the produced component. Preferably, the composition may comprise equal to or less than 1.37 % Mn, or even equal to or less than 1.3 % Mn.

### Niobium (Nb): 0.005 - 0.03 %

Niobium is added to the composition in an amount of at least 0.005 % and preferably at least 0.007 % according to the present disclosure. In order to sufficiently contribute to increased strength and hardness of the printed component, niobium may be added to the herein described composition in an amount of equal to or higher than 0.01 %. Niobium is a strong carbide former and may therefore contribute to increased strength and hardness. However, niobium carbides are precipitated at relatively high temperatures and may therefore be coarse. The possible remelting of already consolidated layers when forming a new layer during additive manufacturing may often be insufficient to dissolve already formed niobium carbides, and could possibly instead lead to an undesired carbide growth thereof. Thus, too high content of niobium may reduce the toughness without further increasing the strength of the printed component. Therefore, niobium content should not exceed 0.025 %. Suitably, niobium may be present in an amount of equal to or less than 0.02 %.

### Boron (B): 0.0005 - 0.003 %

Boron is added for the purpose of increasing hardenability. According to the present invention, Boron is therefore alloyed in the present composition in an amount of at least 5 ppm. At amounts above 30 ppm, boron loses its effect on hardenability. Therefore, amounts above 30 ppm are not suitable for the present alloy. Preferably, boron may be added to the herein described composition in an amount ranging from 10 ppm to 25 ppm.

### Nitrogen (N): 0.002 - 0.04 %

Nitrogen is an element contributing to strength and hardness of the component produced from the steel powder through solution strengthening and/or formation of small nitrides. However, too high amounts of nitrogen may lead to formation of unduly large nitrides which could significantly reduce the toughness. Therefore, the herein described steel powder comprises at most 0.04 % of nitrogen. Suitably, nitrogen is present in an amount of equal to or less than 0.035 %, or in an amount of equal to or less than 0.03 %.

Preferably nitrogen is purposively included into the herein described composition in an amount of equal to or more than 0.002 %. Nitrogen may for example be introduced into the composition of the steel powder by selection of the atomizing medium, and control of the parameters, used during atomization. Suitably, the nitrogen content may be equal to or more than 0.015 %, and preferably equal to or more than 0.02 %.

### Chromium (Cr): equal to or less than 0.35 %

Chromium is not purposefully alloyed to the powder described herein but it may be present as an impurity in the herein described composition. Chromium levels may vary to some extent depending on the manufacturing route applied. For example, scrap based metallurgy may lead to increased chromium levels. Regardless of the manufacturing route, in order to ensure the desired material properties of the component, maximum Cr level for this alloy is equal to or less than 0.35 %, and preferably less than or equal to 0.1 %.

### Nickel (Ni): equal to or less than 0.15 %

Nickel is not purposefully alloyed to the herein described composition, but it may be present in an amount of equal to or less than 0.15 % and more preferably equal to or less than 0.1 %, as an impurity. Nickel levels above 0.15 % may increase the risk for an unduly high amount of retained austenite, which in turn may decrease the dimensional stability of a component produced from the herein described steel powder, and are therefore undesired.

### Molybdenum (Mo): equal to or less than 0.15 %

Molybdenum is not purposefully alloyed to the herein described composition but it may be present in an amount of equal to or less than 0.15 %, or preferably equal to or less than 0.1%. A too high molybdenum content may increase the risk for formation of coarse molybdenum carbides, which in turn may drastically decrease the mechanical properties of the printed component. Therefore, molybdenum should not be present in amounts above 0.15 %. Preferably, molybdenum is present in an amount of equal to or less than 0.1 % and more preferably 0.05 %.

### Vanadium (V): equal to or less than 0.04 %

Vanadium is not purposefully alloyed to the herein described composition but it may be present in an amount of equal to or less than 0.04 %, as an impurity. A too high content of vanadium may negatively affect toughness properties of the printed component. However, vanadium may be present in the herein described composition in an amount equal to or less than 0.04 % V. Preferably, vanadium may be present in an amount of equal to or less than 0.02 %, or even equal to or less than 0.007 %.

### Titanium (Ti): equal to or less than 0.03 %

Titanium is not purposefully alloyed to the herein described composition but it may be present in an amount of equal to or less than 0.03 %, as an impurity. Titanium is a strong carbide and nitride forming element, but results in a type of carbides and/or nitrides that may be harmful to the toughness of the printed component, and thus it is beneficial to keep the Ti content low in the present disclosure. TiC and TiN nucleate already at higher temperatures. However, the high cooling rates related to some additive manufacturing methods, like L-PFB, make the material cool fast enough through the temperature window where TiC and TiN particles nucleate. Suitably, titanium may be present in an amount of equal to or less than 0.02 %, or even equal to or less than 0.01 %.

### Copper (Cu): equal to or less than 0.15 %

Copper is not purposefully alloyed to the herein described composition but it may be present in an amount of equal to or less than 0.15 %, as an impurity. A too high content of copper may negatively affect toughness properties of the printed component. However, copper may be present in the herein described composition in an amount equal to or less than 0.15 % Cu, or even equal to or less than 0.10 %.

### Aluminum (Al): equal to or less than 0.05 %

Aluminum is not purposefully alloyed to the herein described composition but it may be present in an amount of equal to or less than 0.05 %, as an impurity. A too high content of aluminum may lead to formation of undesired inclusions, which in turn may lead to embrittlement due to inclusions acting as crack initiations points. Too high amounts of aluminum may also lead to process problems during powder atomization. Suitably, the aluminum content is limited to equal to or less than 0.05 %, or even equal to or less than 0.03 %.

### Unavoidable impurities

In the present disclosure, unavoidable impurities are considered to be impurities resulting from the manufacturing process and/or the raw material used. Suitably, the amount of such impurities may be limited to at most 0.2 % each (except where otherwise specified below), and at most 0.7 % in total.

One example of an unavoidable impurity is phosphorus (P). Phosphorous may have a negative effect on, for example, toughness of the printed component. Therefore, the phosphorus content is limited to at most 0.03 %. Preferably, the phosphorous content is limited to equal to or less than 0.02 %.

Another example of an unavoidable impurity is sulfur (S). Sulfur is an unwanted element that in combination with other elements forms sulfides. As these sulfides can drastically reduce the toughness of the printed steel component according to the present composition, it is important that the sulfur content does not exceed 0.01 %. In order to reduce the negative effects on the mechanical properties, the sulfur content should be kept as low as possible. Therefore, the sulfur content is preferably limited to equal to or less than 0.005 %, or even equal to or less 0.004 %, or even equal to or less than 0.002 %.

Other examples of possible unavoidable impurities include oxygen (O), zinc (Zn) and calcium (Ca), but are not limited thereto. The oxygen content may suitably be less than 500 ppm. The zinc content may suitably be less than 100 ppm. Moreover, the calcium content may suitably be less than 100 ppm.

The above-described steel powder may be produced by atomizing a melt of a steel alloy. Such a steel alloy may for example be produced via refining of crude iron (also known as pig iron) in a basic oxygen furnace (BOF), alternatively melting of for example scrap in an electric arc furnace (EAF), followed by additional alloying in for example a ladle furnace to thereby arrive at a steel alloy that would result in the desired composition of the steel powder. The steel alloy may thereafter be remelted in an induction furnace. If desired, additional material or scrap can be added to the melt, allowing for further alloying. Preferably, said remelting is performed under inert protective gas atmosphere, e.g. argon. When the melt has reached a desired temperature, the melt may be transferred to an atomizing nozzle, for example by tilting the induction furnace or by opening a stopper rod blocking an outlet of the induction furnace.

Atomization is performed by subjecting the melt leaving the atomizing nozzle to an atomization medium. The atomization medium is used to break up the molten stream into fine metal droplets which are thereafter quickly cooled down so as to form metal powder particles. Said metal power particles may typically have a size less than 1 mm in diameter. Preferably, the atomization parameters may be controlled such that the obtained metal powder particles have a size of less than about 200 µm. The atomization medium may suitable be argon, nitrogen, or any mixture thereof, but is not limited thereto. Atomization using an atomization medium comprising of nitrogen may lead to a pick-up of nitrogen and thereby a higher nitrogen content in the resulting powder compared to if using only argon as atomizing medium.

It should be noted that in general, the powder obtained by the atomization process may need to be further processed in order to be suitable for use in an additive manufacturing process. More specifically, it may be needed to subject the obtained powder to one or more further process steps to arrive at a suitable particle size distribution of the powder. In order to obtain the desired powder fractions, the powder can be put through a sieving operation or be air classified, or a combination thereof. During sieving, the powder is transferred through a mesh with a defined opening size. Particles larger than the opening will stay on top of the mesh and the ones that are smaller will be transferred through. The cut point can be chosen by adjusting the mesh opening size. To gain a target particle size distribution of the steel powder, the material can be directly sieved to the target particle size distribution. Alternatively, two or more powders, each having a respective particle size distribution, can be mixed, if desired.

Different additive manufacturing processes use powders with different target particle size intervals. For usage in a DED process, a powder particle size between 45-150 µm is suitable, where the lower limit of the interval indicates the D10 value and the upper limit of the interval indicates the D90 value. D10 represents that the portion of particles with diameters smaller than this value is 10 %, and D90 represents that the portion of particles with diameters smaller than this value is 90 %. For usage in a L-PBF process, a powder particle size of 15-63 µm, or even 15-45 µm, can be used, where the lower limit of the interval indicate the D10 value and upper limit of the interval indicate the D90 value. Particle size distribution may be determined according to ISO 13322-2.

A more spherical powder enhances the printability of the powder since it improves the flowability of the powder. A good flowability for example allows the powder to be more closely packed in the layer, which is subsequently melted during an AM process, which in turn for example leads to lower risk for porosity in the as-built material. Sphericity is defined as SPHT=4πA/P2, where A is the measured area covered by a particle projection, P is the measured perimeter/circumference of a particle projection. A sphericity of 1 means that the particle is a perfect sphere. The mean sphericity of the material should preferably be 0.90 or greater. Sphericity may be determined according to ISO 9276-6:2008. The sphericity of the powder is primarily a result from the process of manufacturing the powder.

A component produced by additive manufacturing using the herein described steel powder will typically obtain a microstructure comprising predominantly of martensite already in the as-built condition. Subjecting the as built component to one or more heat treatments may increase the amount martensite further and reduce the amount of retained austenite. For example, the as-built component may be subjected to an austenitization temperature followed by quenching and tempering.

The herein described steel powder may be used for producing a large variety of components by additive manufacturing, such components being intended for a wide variety of applications. For example, the herein described steel powder may be used for producing general engineering components or various automotive components.

### Experimental results

Two exemplary steel powders (Powder A and Powder B) were produced by gas atomizing molten steel using two different atomizing media. The final compositions for both Powders A and B, in percent by weight, are specified in Table 1.

Powders A and B were thereafter sieved to obtain a particle size range suitable for the L-PBF process. Powder size distribution and aspect ratio for Powders A and B were determined by dynamic image analysis according to ISO 13322-2:2006. Furthermore, the sphericity of the resulting powders was determined according to ISO 9276-6:2008. The determined powder size distribution, aspect ratio, and sphericity for the obtained steel powders is presented in Table 2.

**Table 1.**

| | **Powder A** | **Powder B** |
|---|---|---|
| **C** | 0.17 | 0.17 |
| **Si** | 0.23 | 0.23 |
| **Mn** | 1.09 | 1.10 |
| **P** | 0.01 | 0.01 |
| **S** | 0.001 | 0.001 |
| **Cr** | 0.03 | 0.03 |
| **Ni** | 0.06 | 0.06 |
| **Mo** | 0.01 | 0.01 |
| **V** | 0.004 | 0.004 |
| **Ti** | 0.007 | 0.007 |
| **Cu** | 0.07 | 0.07 |
| **Al** | 0.009 | 0.009 |
| **N** | 0.0050 | 0.017 |
| **Nb** | 0.013 | 0.013 |
| **B** | 0.0017 | 0.0017 |
| **Fe** | Bal. | Bal. |

**Table 2.**

| | **D10 [µm]** | **D50 [µm]** | **D90 [µm]** | **Aspect ratio** | **Sphericity** |
|---|---|---|---|---|---|
| **Powder A** | 18 | 29 | 41 | 0,87 | 0,91 |
| **Powder B** | 25 | 35 | 47 | 0,88 | 0,90 |

Moreover, the flowability of the two steel powders was tested after sieving. For this purpose, a weighted mass of 50 g of each steel powder was timed as it flowed through an orifice of a Hall Flowmeter funnel. The tests were performed according to ISO 4490:2018 using two different funnels, both funnels falling within the standard. Both steel powders demonstrated a Hall flow well below 30s/50g, irrespectively of the funnel used. This demonstrates that both steel powders have a good flowability making them suitable for use in, for example, a L-PBF process.

The resulting powders were thereafter printed to a plurality of bodies (described in more detail below) for the purpose of investigating properties after printing in as-built condition. Printing was carried out on three separate occasions. All bodies of each print for both Powder A and B respectively were printed in the same process (i.e. at the same time) on a common building plate. Printing was performed by selective laser melting using an SLM^{®} 280. The process parameters used are shown in Table 3. Note that for Powder B, two different layer thicknesses were used, namely 30 and 90 µm.

**Table 3.**

| **Print** | **Powder** | **Laser power (W)** | **Laser speed (mm/s)** | **Layer thickness (µm)** | **Hatch distance (mm)** |
|---|---|---|---|---|---|
| **Print1** | **Powder A** | 225 | 658 | 30 | 0,12 |
| **Print2** | **Powder B** | 225 | 658 | 30 | 0,12 |
| **Print3** | **Powder B** | 375 | 675 | 90 | 0,15 |

Table 4 discloses the results from hardness measurements for each print and mechanical testing for Print1 and Print2 respectively, which used either Powder A or Powder B. In Table 4, the build directions, namely vertical and horizontal, represent the direction of the longitudinal axis of the printed body.

For the purpose of tensile testing, printing of bodies having a cylindrical shape with a diameter of 12 mm and a longitudinal extension of 90 mm was done. Half of the cylindrical bodies of each steel powder were printed with a building direction along the longitudinal axis of the cylinder, and half of the cylindrical bodies of each steel powder were printed with a building direction along the radial direction of the cylinder. After printing the cylindrical bodies were machined and prepared as test samples. Tensile testing, in the as-built condition, was performed according to ISO 6892-1:2019. Table 4 discloses the average results of six samples for Print1 and Print2, together with the respective standard deviation. Each sample was taken for a respective printed body. Testing was conducted at room temperature.

For the purpose of testing impact toughness, printing of bodies having a rectangular shape with the dimensions 12x12x70 mm was done. Half of said rectangular bodies of each steel powder were printed with a building direction corresponding to the longest extension of the rectangular bodies, and half of the rectangular bodies of each steel powder were printed with a building direction perpendicular to the longest extension of the rectangular bodies. The printed bodies were thereafter machined to the configuration of the samples used for testing. Impact toughness (Charpy-V) was tested according to ISO 148-1:2016, at room temperature. Table 4 discloses the average result of six samples for both Print1 and Print2 together with the standard deviation. Each sample was taken for a respective printed body. Testing was conducted at room temperature.

Furthermore, hardness was tested according to ISO 6507-1:2018. For this test, printed rectangular bodies with dimensions 10x20x90 mm were used with building direction corresponding to the longest extension of the respective rectangular bodies. Hardness was determined at different positions along the build direction. The average hardness measured for the samples built in Print1, Print2 and Print 3 is shown in Table 4. Testing was conducted at room temperature.

Furthermore, the microstructure was investigated using Light Optical Microscopy (LOM). Rectangular bodies with dimension 10x20x90 mm were printed, with building direction along the longest extension of the body. Images at 50x magnifications were taken along the build direction and stitched together. The images were thereafter analyzed using the software ImageJ. The samples were etched in 2% Nital before analysis of the microstructure. All the samples showed predominantly martensitic microstructure.

Table 5 shows the measured area percentage of pores, relative density, and Equivalent Circular Diameter (ECD) data of Print 1, 2 and 3. Print 1 showed an area percentage of pores of 0.019 %, which means that a relative density of 99.981 % was obtained. The average size of the pores (Equivalent Circular Diameter ECD) was 4.8 µm. Print 2 showed an area percentage of pores of 0.002 %, which means that a relative density of 99.998 % was obtained. The average size of the pores (Equivalent Circular Diameter ECD) was 12.91 µm. Print 3 showed an area percentage of pores of 0.006 %, which means that a relative density of 99.994 % was obtained. The average size of the pores (Equivalent Circular Diameter ECD) was 13.29 µm.

**Table 4.**

| **Powder** | **Build direction** | **Yield strength Rp0.2 [MPa]** | **Tensile strength Rm [MPa]** | **Elongation A5 [MPa]** | **Charpy V [MPa]** | **Hardness [HV5]** |
|---|---|---|---|---|---|---|
| | | Average ± Standard deviation | Average ± Standard deviation | Average ± Standard deviation | Average ± Standard deviation | Average |
| Print1 | Vertical XY | 892 ±8 | 936 ±9 | 12 ±0 | 192 ±9 | 276 |
| | Horizontal XZ | 1002 ±6 | 1057 ±4 | 17 ±1 | 202 ±12 | |
| Print2 | Vertical XY | 950 ±5 | 1026 ±8 | 16 ±1 | 220 ±7 | 279 |
| | Horizontal XZ | 946 ±9 | 1000 ±12 | 18 ±1 | 233 ±6 | |
| Print3 | Vertical XY | - | - | - | - | 285 |
| | Horizontal XZ | - | - | - | - | |

**Table 5**

| | Area percentage of pores (%) | Relative density (%) | Equivalent Circular Diameter ECD (µm) |
|---|---|---|---|
| Print 1 | 0,019 | 99,981 | 4,8 |
| Print 2 | 0,002 | 99,998 | 12,91 |
| Print 3 | 0,006 | 99,994 | 13,29 |

## Claims

1. A steel powder for use in additive manufacturing processes, the steel powder having the following composition in percent by weight (wt.-%):
| | |
|---|---|
| C | 0.1 - 0.3, |
| Si | 0.15 - 0.4, |
| Mn | 0.8 - 1.4, |
| Nb | 0.005 - 0.03, |
| B | 0.0005 - 0.003, |
| N | 0.002 - 0.04 |
optionally Cr equal to or less than 0.35,
optionally Ni equal to or less than 0.15,
optionally Mo equal to or less than 0.15,
optionally V equal to or less than 0.04,
optionally Ti equal to or less than 0.03,
optionally Cu equal to or less than 0.15,
optionally Al equal to or less than 0.05,
balance Fe and unavoidable impurities;
wherein the unavoidable impurities P and S are limited to:
| | |
|---|---|
| P | equal to or less than 0.03, preferably equal to or less than 0.02 |
| S | equal to or less than 0.005, preferably equal to or less than 0.004 |

2. The steel powder according to claim 1, wherein the composition comprises 0.12 - 0.27 wt.-% C; preferably 0.14 - 0.21 wt.-% C.

3. The steel powder according to any one of claims 1 or 2, wherein the composition comprises 0.18 - 0.3 wt.-% Si; preferably 0.2 - 0.27 wt.-% Si.

4. The steel powder according to any one of the preceding claims, wherein the composition comprises 0.9 - 1.37 wt.-% Mn; preferably 1 - 1.3 wt.-% Mn.

5. The steel powder according to any one of the preceding claims, wherein the composition comprises 0.007 - 0.025 wt.-% Nb, preferably 0.007 - 0.02 wt.-% Nb.

6. The steel powder according to any one of the preceding claims, wherein the composition comprises 0.001 - 0.0025 wt.-% B.

7. The steel powder according to any one of the preceding claims, wherein the composition comprises 0.015 - 0.035 wt.-% N, preferably 0.02 - 0.03 wt.-% N.

8. The steel powder according to any one of the preceding claims, wherein the composition comprises equal to or less than 0.1 wt.-% of Cr.

9. The steel powder according to any one of the preceding claims, wherein the composition comprises equal to or less than 0.1 wt.-% of Ni.

10. The steel powder according to any one of the preceding claims, wherein the composition comprises equal to or less than 0.1 wt.-% of Mo, preferably equal to or less than 0.05 wt.-% of Mo.

11. The steel powder according to any one of the preceding claims, wherein the composition comprises equal to or less than 0.02 wt.-% of V; preferably equal to or less than 0.007 wt.-% of V.

12. The steel powder according to any one of the preceding claims, wherein the composition comprises equal to or less than 0.02 wt.-% of Ti; preferably equal to or less than 0.01 wt.-% of Ti.

13. The steel powder according to any one of the preceding claims, wherein the steel powder is powder atomized by an atomizing medium comprising or consisting of nitrogen gas.

14. Use of the steel powder according to any one of the preceding claims in the production of components by additive manufacturing, such as by laser powder bed fusion or directed energy deposition.

15. Method for producing a component comprising a step of performing additive manufacturing using the steel powder according to any one of claims 1 to 13.
